# EUROPEAN PATENT APPLICATION

(11) **EP 2 509 189 A1**
(43) Date of publication of application: **10.10.2012**
(21) Application number: 10833341.0
(22) Date of filing: 26.11.2010
(51) Int. Cl.: H02J 9/06, H01M 10/44, H02J 7/00, H02J 7/34

(54) **CONTROL APPARATUS, CONTROL SYSTEM, AND CONTROL METHOD**

(30) Priority: 30.11.2009 JP 2009272986
(71) Applicant: Kyocera Corporation, Kyoto-shi Kyoto 612-8501 (JP)
(72) Inventor: KIUCHI, Kazuya, Tokyo 158-8610 (JP); KUSAFUKA, Kaoru, Tokyo 158-8610 (JP); WATANABE, Tadayuki, Tokyo 158-8610 (JP); SHICHIRI, Kazumasa, Tokyo 158-8610 (JP); IWABUCHI, Akinori, Yokohama-shi Kanagawa 224-8502 (JP)
(74) Representative: Schwabe - Sandmair - Marx
(86) International application number: PCT/JP2010/071151
(87) International publication number: WO 2011/065496

(57) **Abstract**

Provided is a smart controller (102) that detects the amount of power remaining in a storage battery (108). The smart controller (102) also determines the load operation modes of an illumination (110), an air conditioning apparatus (112), and a heat storage apparatus (114) to become modes with lower power consumption when the remaining amount of power becomes lower, by comparing the detected remaining amount of power, and a threshold value in a predetermined correlation between operation modes and threshold values for the remaining amount of power, and thereby controls the illumination (110), the air conditioning apparatus (112), and the heat storage apparatus (114), as loads.

## Description

### TECHNICAL FIELD

The present invention relates to a control device provided in a power consumer including a DC power supply, loads, and a battery capable of storing power from the DC power supply, and controlling the loads, a control system provided with the control device and a device capable of operating a plurality of loads, and a control method in the control device.

### BACKGROUND ART

In recent years, in view of the reduction of an environment load, a system is gradually becoming available in which a DC power supply such as a photovoltaic cell is provided in a house and the like which are power consumers, electric power required by devices in the house is supplied by power generated by the DC power supply, a battery in the house is charged by surplus power (for example, refer to Patent Document 1), and the battery is discharged to supply power to loads at the time of a self-sustained operation (for example, at the time of power outage) in which no power from an electric power system is supplied.

### PRIOR ART DOCUMENT

### PATENT DOCUMENT

Patent Document 1: Japanese Patent Application Laid-open No. 2007-288932

### SUMMARY OF THE INVENTION

However, in the above-mentioned conventional art, in the state in which a DC power supply may not generate electric power, for example, in the rain or at night when the DC power supply is a photovoltaic cell, since a remaining power amount of a battery is consumed in a short time, the loads may not operate.

Therefore, the present invention has been achieved in view of the above-described problems, and an object thereof is to provide a control device, a control system, and a control method, by which it is possible to increase the operation time of loads.

To solve the above problem, the present invention has following features. A first feature of the present invention is summarized as a control device (smart controller 102) provided in a power consumer (smart house 10) including a DC power supply (photovoltaic cell 106), a load(illumination 110, air conditioner 112), and a battery (battery 108) capable of storing power from the DC power supply, and controlling the load, the control device comprising: a detection unit (detection unit 162) configured to detect a remaining amount of the battery; and a load control unit (load control unit 164) configured to control a degree of power consumption of the load according to the remaining amount of the battery detected by the detection unit, at a time of a self-sustained operation in which no power from an electric power system is supplied to the load.

The control device as described above controls the degree of power consumption of loads provided in a consumer according to a remaining amount of the battery at the time of a self-sustained operation (for example, at the time of power outage). Consequently, it is possible to make the power supplied from the battery to the loads as small as possible and to operate the loads for a long time.

A second feature of the present invention is summarized as that the load control unit strengthens restriction of the power consumption as the remaining amount of the battery is smaller, and loosens the restriction of the power consumption as the remaining amount of the battery is larger.

A third feature of the present invention is summarized as that operation modes related to the load are associated with threshold values of the remaining amount of the battery, and the load control unit selects the operation mode based on the remaining amount of the battery detected by the detection unit and the threshold values of the remaining amount of the battery.

A fourth feature of the present invention is summarized as that the operation modes are associated with the threshold values of the remaining amount of the battery for respective load.

A fifth feature of the present invention is summarized as that the load control unit transmits an instruction related to control of the degree of the power consumption of the load to a device for operating a plurality of load.

A sixth feature of the present invention is summarized as the control device further comprising, in the consumer, a sensor (motion sensor 176) configured to detect a user staying in a predetermined area where the load is provided, wherein the load control unit restricts the power consumption of the load, when the user is not detected by the sensor.

A seventh feature of the present invention is summarized as that the load control unit selects an operation mode related to the load immediately before the self-sustained operation time, when the user is detected by the sensor,.

An eighth feature of the present invention is summarized as a control system including a control device provided in a power consumer including a DC power supply, a load, and a battery capable of storing power from the DC power supply, and controlling the load, and a device capable of operating the plurality of load, wherein the control device comprises: a detection unit configured to detect a remaining amount of the battery; and a load control unit configured to control a degree of power consumption of the load according to the remaining amount of the battery detected by the detection unit, at a time of a self-sustained operation in which power from an electric power system is not supplied to the load, and to transmit an instruction related to control of the degree of the power consumption of the load to the device, and the device comprises: a transmission unit (transmission processing unit 184) configured to transmit an operation instruction to the load, the operation instruction corresponding to the instruction related to the control of the degree of the power consumption of the load.

A ninth feature of the present invention is summarized as a control method in a control device provided in a power consumer including a DC power supply, a load, and a battery capable of storing power from the DC power supply, and controlling the load, the control method comprising: a step of detecting, by the control device, a remaining amount of the battery; and a step of controlling, by the control device, a degree of power consumption of the load according to the detected remaining amount of the battery, at a time of a self-sustained operation in which no power from an electric power system is supplied to the load.

According to the present invention, it is possible to increase the operation time of loads.

### BRIEF DESCRIPTION OF THE DRAWINGS

[Fig. 1] Fig. 1 is a configuration diagram of an electric power system according to an embodiment of the present invention.
[Fig. 2] Fig. 2 is a configuration diagram of a smart controller according to the embodiment of the present invention.
[Fig. 3] Fig. 3 is a diagram illustrating a correspondence relation between operation modes and remaining amount threshold values according to the embodiment of the present invention.
[Fig. 4] Fig. 4 is a diagram illustrating time transition of a remaining power amount according to the embodiment of the present invention.
[Fig. 5] Fig. 5 is a perspective view illustrating the external appearance of a remote control sensor unit according to the embodiment of the present invention.
[Fig. 6] Fig. 6 is a configuration diagram of the remote control sensor unit according to the embodiment of the present invention.
[Fig. 7] Fig. 7 is a sequence diagram illustrating an operation of an electric power system according to the embodiment of the present invention.
[Fig. 8] Fig. 8 is a diagram illustrating a correspondence relation between operation modes and remaining amount threshold values according to the embodiment of the present invention.
[Fig. 9] Fig. 9 is a diagram illustrating a table in which operation modes immediately before than a self-sustained operation time and loads are associated with each other according to a modification of the present invention.
[Fig. 10] Fig. 10 is a sequence diagram illustrating an operation of an electric power system according to a modification of the present invention.
[Fig. 11] Fig. 11 is a diagram illustrating a table in which loads and identification IDs of a motion sensor are associated with each other according to a modification of the present invention.

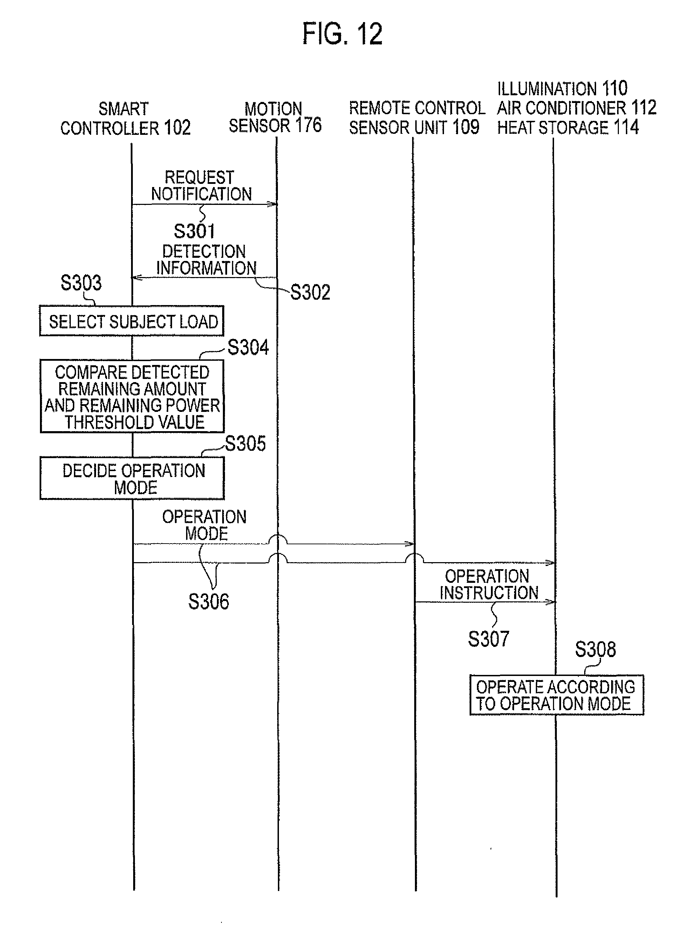

[Fig. 12] Fig. 12 is a sequence diagram illustrating an operation of an electric power system according to a modification of the present invention.

### MODES FOR CARRYING OUT THE INVENTION

Hereinafter, an embodiment of the present invention will be described with reference to the accompanying drawings. Specifically, the embodiment of the present invention will be described in sequence of (1) Configuration of electric power system, (2) Operation of smart controller, (3) Operation and effect, (4) Modification according to the present embodiment, and (5) Other embodiments. In all drawings for explaining the following embodiments, the same or similar reference numerals are used to designate the same or similar elements.

### (1) Configuration of electric power system

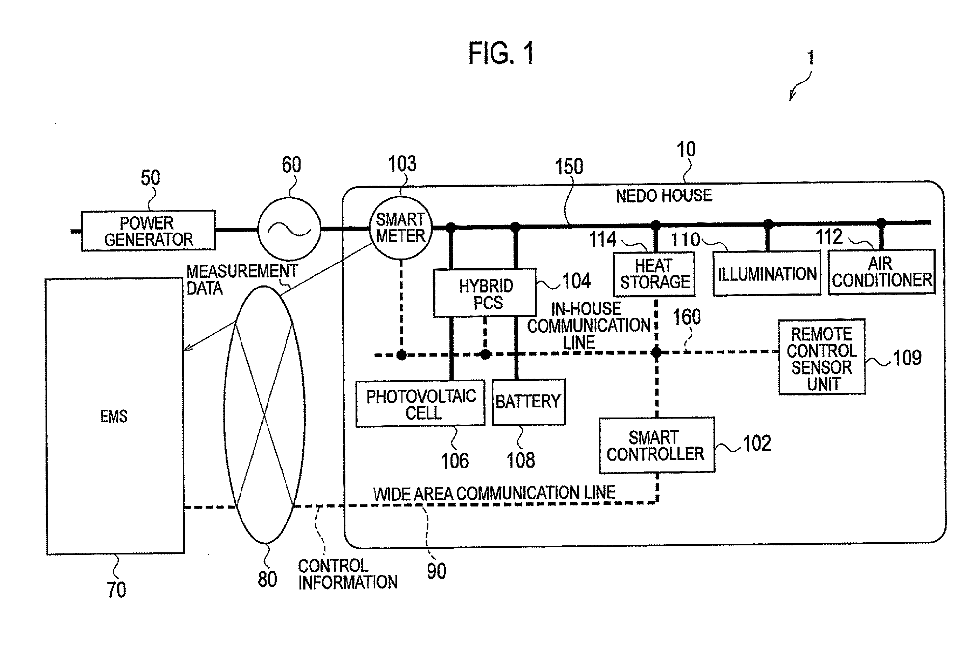

Fig. 1 is a configuration diagram of an electric power system 1 according to the embodiment of the present invention. The electric power system 1 illustrated in Fig. 1 is a system employing so-called a smart grid.

As illustrated in Fig. 1, the electric power system 1 includes a smart house 10 serving as a power consumer, a power generator 50 serving as a power supplier, an energy management system (EMS) 70 for controlling the whole power of the electric power system 1, an electric power system 60 between the smart house 10 and the power generator 50, and the Internet 80 serving as a communication path between the smart house 10 and the EMS 70. In addition, under the control of the electric power system 60, a plurality of smart houses 10 exist in plural, and these smart houses 10 form a power consumer group.

In the electric power system 1, power is transmitted to the smart house 10 from the power generator 50 via the electric power system 60 and is used in the smart house 10. Furthermore, in some cases, power is fed back from the smart house 10 to the electric power system 60.

Furthermore, in the electric power system 1, an amount of power to be used in the smart house 10 is measured and is transmitted to the EMS 70 via the Internet 80 as measurement data.

The EMS 70 decides an electricity prices based on the electric power supply from the electric power system 60 and an electric power demand of the consumer group based on the measurement data. Here, as a value (supply-demand gap) obtained by subtracting the amount of power to be used in the consumer group from the amount of power that can be supplied from the electric power system 60 to the consumer group is larger, the EMS 70 reduces an electricity prices. As the supply-demand gap is smaller, the EMS 70 increases the electricity prices. Specifically, it is possible for the EMS 70 to decide two types of electricity prices, that is, TOU (Time of Use) which is an electricity prices predetermined according to time zones based on a past supply-demand gap, and RTP (Real Time Pricing) which is an electricity prices set based on a real-time supply-demand gap.

Moreover, the EMS 70 transmits control information including charge information indicating the decided electricity prices to the smart house 10 via the Internet 80. Specifically, the EMS 70, for example, in a 24-hour cycle, transmits the TOU a predetermined period before (for example, a day before) a time zone to which the TOU is applied. The EMS 70 transmits the RTP in a cycle (for example, a 10-minute cycle) shorter than the transmission cycle of the TOU.

The smart house 10 includes: a smart controller 102 serving as a control device, a smart meter 103; a hybrid power conditioner (a hybrid PCS) 104; a photovoltaic cell 106 serving as a DC power supply; a battery 108; a remote control sensor unit 109; and an illumination 110, an air conditioner 112, and a heat storage 114, which serve as a load.

The smart controller 102 is connected to the Internet 80 via a wired line or a wide area communication line 90 serving as a radio line. Furthermore, the smart controller 102 is connected to the smart meter 103, the hybrid PCS 104, the remote control sensor unit 109, and the heat storage 114 via a wired line or an in-house communication line 160 serving as a radio line. The configuration and operation of the smart controller 102 will be described later.

The smart meter 103 is connected to the electric power system 60, and is connected to an in-house distribution line 150. The smart meter 103 detects the amount of power supplied from the electric power system 60 and used for the operation of the illumination 110, the air conditioner 112, and the heat storage 114 or used for charging the battery 108, and transmits the detected power amount to the EMS 70 via the Internet 80 as measurement data.

The hybrid PCS 104 is connected to the in-house distribution line 150, and is connected to the photovoltaic cell 106 and the battery 108. The hybrid PCS 104 sends DC power generated by the photovoltaic cell 106 to the in-house distribution line 150 or stores the DC power in the battery 108, under the control by the smart controller 102. Furthermore, the hybrid PCS 104 converts DC power due to the discharge of the battery 108 to AC power and sends the AC power to the in-house distribution line 150, under the control by the smart controller 102. The AC power sent to the in-house distribution line 150 is appropriately used in the illumination 110, the air conditioner 112, and the heat storage 114, or is fed back to the electric power system 60. Furthermore, the hybrid PCS 104 converts AC power from the electric power system 60 to DC power and stores the DC power in the battery 108, under the control by the smart controller 102.

Furthermore, at the time of a self-sustained operation in which no power is supplied from the electric power system 60 to a consumer, the hybrid PCS 104 converts DC power due to the discharge of the battery 108 to AC power and sends the AC power to the in-house distribution line 150, under the control by the smart controller 102. The AC power sent to the in-house distribution line 150 is appropriately used in the illumination 110, the air conditioner 112, and the heat storage 114.

The remote control sensor unit 109 emits infrared rays corresponding to an operation instruction for operating the illumination 110 and the air conditioner 112, under the control by the smart controller 102. In addition, instead of emitting the infrared rays, the remote control sensor unit 109 may also transmit an operation instruction for operating the illumination 110 and the air conditioner 112 through radio communication.

The illumination 110, the air conditioner 112, and the heat storage 114 are connected to the in-house distribution line 150, and operate by AC power from the in-house distribution line 150. The heat storage 114, for example, is a heat pump.

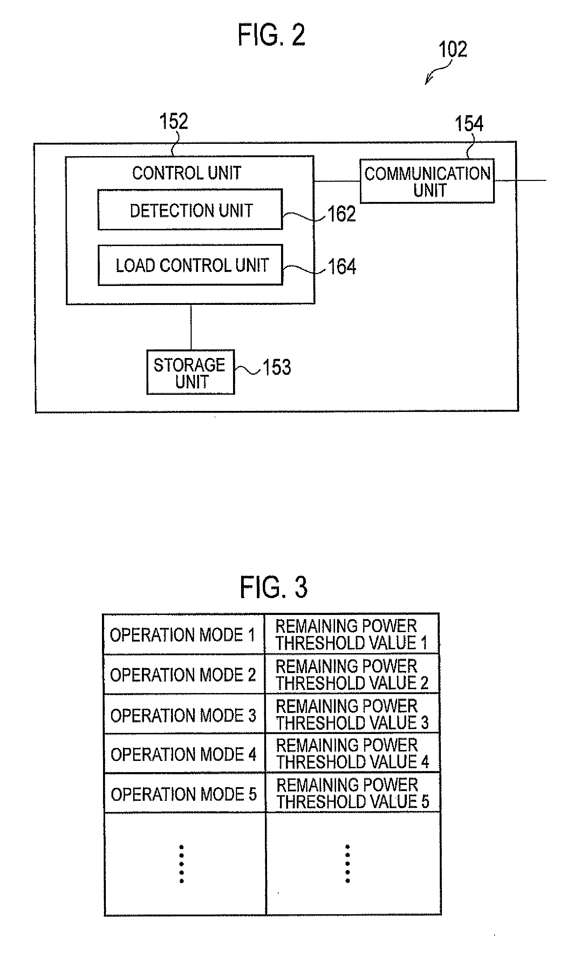

Fig. 2 is a configuration diagram of the smart controller 102. As illustrated in Fig. 2, the smart controller 102 includes a control unit 152, a storage unit 153, and a communication unit 154.

The control unit 152, for example, is a CPU, and controls each element of the smart house 10. The storage unit 153 is configured by using a memory, for example, and stores various types of information used for the control and the like of each element of the smart house 10. The communication unit 154 receives control information from the EMS 70 via the wide area communication line 90 and the Internet 80. Furthermore, the communication unit 154 communicates with the smart meter 103, the hybrid PCS 104, and the remote control sensor unit 109 via the in-house communication line 160.

The control unit 152 includes a detection unit 162 and a load control unit 164. The detection unit 162 detects a remaining power amount in the battery 108. Specifically, the detection unit 162 requests the hybrid PCS 104 for the remaining power amount in the battery 108 via the communication unit 154. Upon request of the battery control unit 164, the hybrid PCS 104 detects the remaining power amount in the battery 108 and outputs the remaining power amount to the smart controller 102. The detection unit 162 receives the remaining power amount via the communication unit 154.

At the time of a self-sustained operation, the load control unit 164 compares the remaining power amount detected by the detection unit 162 with a threshold value (a remaining amount threshold value) of a predetermined remaining power amount, thereby deciding the operation modes of the illumination 110, the air conditioner 112, and the heat storage 114, which serve as a load. Here, it is assumed that the operation modes are associated with the magnitude of power consumption of loads. That is, a difference exists in power consumption of loads according to set operation modes.

Fig. 3 is a diagram illustrating a correspondence relation between operation modes and remaining amount threshold values. According to the correspondence relation between operation modes and remaining amount threshold values, the remaining amount threshold value is lower in an operation mode with smaller power consumption and is higher in an operation mode with larger power consumption. In Fig. 3, as the operation mode has a higher number, corresponding power consumption is smaller, and as the remaining amount threshold value has a higher number, the remaining amount threshold value is lower. The correspondence relations between the operation modes and the remaining amount threshold values are predetermined for each of the illumination 110, the air conditioner 112, and the heat storage 114, which serve as a load, and are stored in the storage unit 153.

The load control unit 164 reads out the correspondence relations between the operation modes and the remaining amount threshold values, for each of the illumination 110, the air conditioner 112, and the heat storage 114, which serve as a load, from the storage unit 153. Next, among the remaining amount threshold values, the load control unit 164 specifies a remaining amount threshold value which is lower than the detected remaining power amount and is the nearest the detected remaining power amount.

For example, when the detected remaining power amount exists between the remaining amount threshold value 3 and the remaining amount threshold value 4 illustrated in Fig. 3, the load control unit 164 specifies the remaining amount threshold value 4. Moreover, the load control unit 164 specifies an operation mode, which corresponds to the specified remaining amount threshold value, for each of the illumination 110, the air conditioner 112, and the heat storage 114, which serve as a load. For example, when the remaining amount threshold value 4 has been specified in Fig. 3, the operation mode 4 corresponding to the remaining amount threshold value 4 is specified.

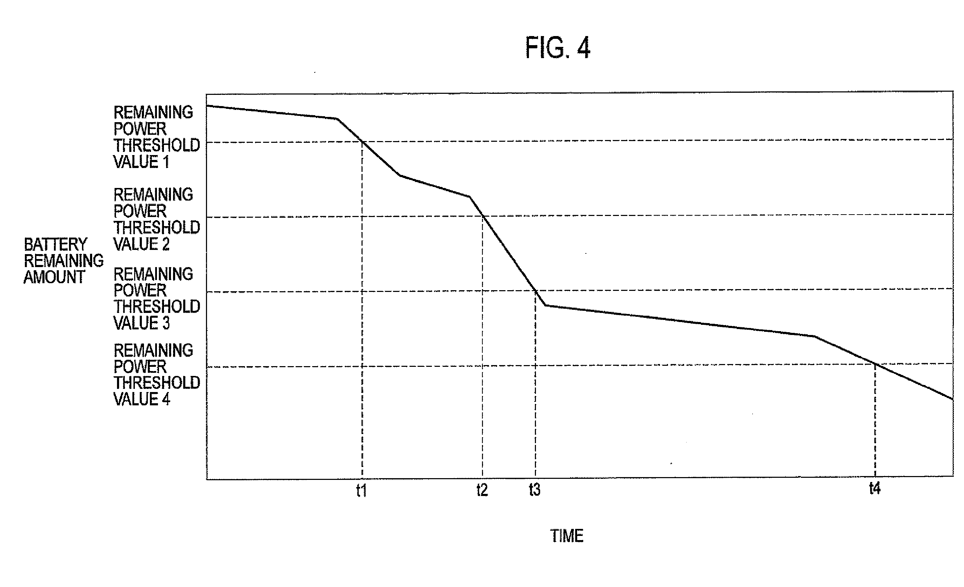

Hereinafter, the process of the load control unit 164 will be described using the case, in which the correspondence relation between the operation modes and the remaining amount threshold values is illustrated in Fig. 3 and time transition of a remaining power amount is illustrated in Fig. 4, as an example.

Since, initially, the remaining power amount is equal to or more than the remaining amount threshold value 1, the load control unit 164 decides an operation mode of a load as the operation mode 1. If the remaining power amount is smaller than the remaining amount threshold value 1 at time t1, the load control unit 164 switches the operation mode of the load from the operation mode 1 to the operation mode 2. If the remaining power amount is smaller than the remaining amount threshold value 2 at time t2, the load control unit 164 switches the operation mode of the load from the operation mode 2 to the operation mode 3. If the remaining power amount is smaller than the remaining amount threshold value 3 at time t3, the load control unit 164 switches the operation mode of the load from the operation mode 3 to the operation mode 4. If the remaining power amount is equal to or more than the remaining amount threshold value 4 at time t4, the load control unit 164 switches the operation mode of the load from the operation mode 4 to the operation mode 5.

In this way, whenever the operation mode is decided for each of the illumination 110, the air conditioner 112, and the heat storage 114, which serve as a load, the load control unit 164 associates the operation mode with identification information for uniquely specifying a corresponding load to generate control instruction information. Moreover, in order to control the illumination 110 and the air conditioner 112, the load control unit 164 transmits the control instruction information to the remote control sensor unit 109 via the communication unit 154 and the in-house communication line 160. Furthermore, in order to control the heat storage 114, the load control unit 164 transmits the control instruction information to the heat storage 114.

The remote control sensor unit 109 receives the control instruction information and emits infrared rays corresponding to an operation instruction according to the control instruction information.

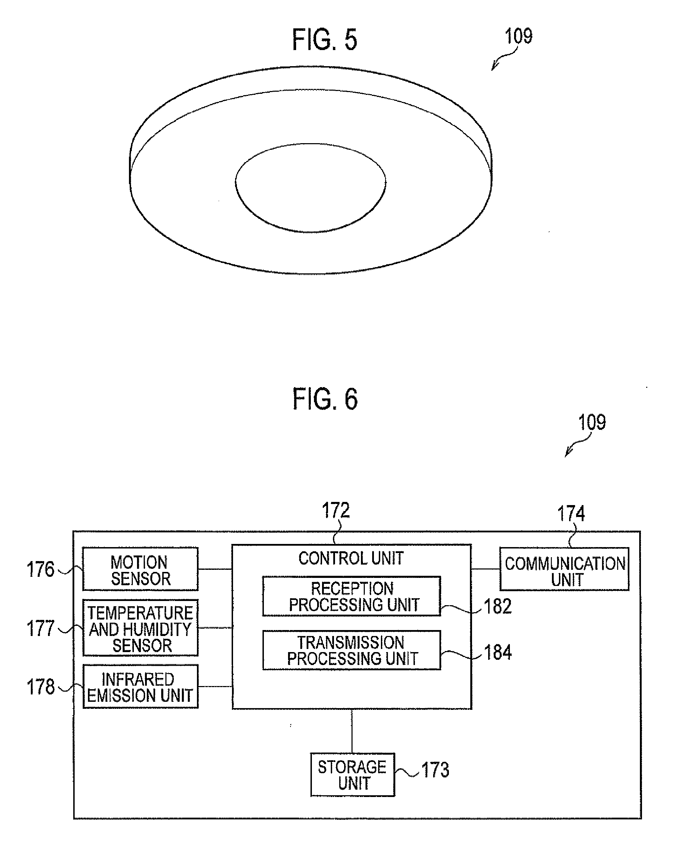

Fig. 5 is a perspective view illustrating the external appearance of the remote control sensor unit 109 and Fig. 6 is a configuration diagram of the remote control sensor unit 109. The remote control sensor unit 109 is installed on the ceiling of a room provided with the illumination 110 and the air conditioner 112, which serve as a load, in the smart house 10.

The remote control sensor unit 109 includes a control unit 172, a storage unit 173, a communication unit 174, a motion sensor 176, a temperature and humidity sensor 177, and an infrared emission unit 178.

The control unit 172, for example, is a CPU, and controls each element of the remote control sensor unit 109. The storage unit 173, for example, is configured by using a memory, and stores various types of information used for the control and the like of each element of the remote control sensor unit 109. The communication unit 174 communicates with the smart controller 102 via the in-house communication line 160, and receives the control instruction information.

The motion sensor 176 detects a human staying in the room provided with the remote control sensor unit 109. The temperature and humidity sensor 177 detects temperature and humidity of the room provided with the remote control sensor unit 109. The infrared emission unit 178 emits infrared rays corresponding to an operation instruction for the illumination 110 and the air conditioner 112, which serve as a load.

The control unit 172 includes a reception processing unit 182 and a transmission processing unit 184. The reception processing unit 182 receives the control instruction information received in the communication unit 174. The transmission processing unit 184 specifies a load to be controlled and an operation mode, which is the content of control, based on the control instruction information. Moreover, the transmission processing unit 184 controls the infrared emission unit 178 to emit infrared rays corresponding to an operation instruction for allowing the load to be controlled to perform an operation corresponding to the operation mode.

The illumination 110 and the air conditioner 112, which serve as a load, include infrared reception units (not illustrated), respectively. The illumination 110 and the air conditioner 112, which serve as a load, operate in an operation mode indicated by the operation instruction corresponding to the infrared rays received in the infrared reception units.

Furthermore, the heat storage 114 serving as a load operates in an operation mode corresponding to the control instruction information.

### (2) Operation of electric power system

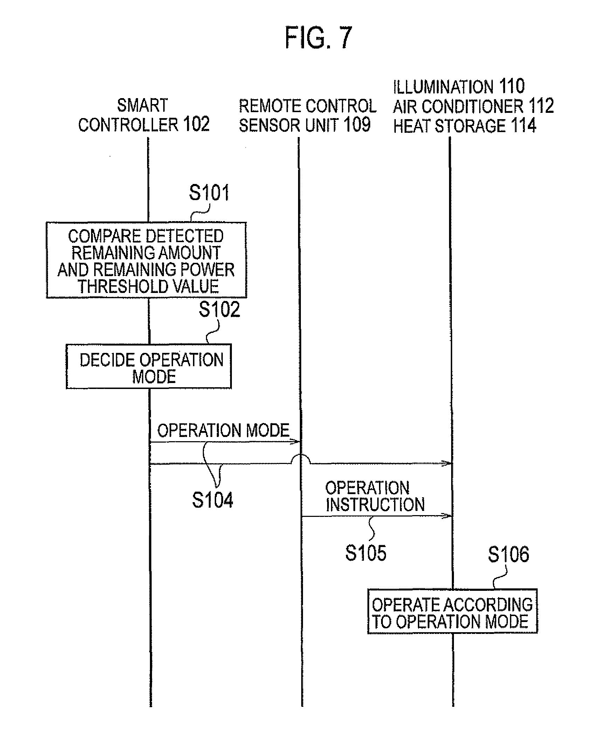

Next, the operation of the electric power system 1 will be described. Fig. 7 is a sequence diagram illustrating the operation of the electric power system 1.

At the time of a self-sustained operation, in step S101, the smart controller 102 detects the remaining power amount of the battery 108, and compares the remaining power amount with a remaining amount threshold value in the predetermined correspondence relation between the operation modes and the remaining amount threshold values.

In step S102, the smart controller 102 decides operation modes of the illumination 110, the air conditioner 112, and the heat storage 114, which serve as a load, based on a comparison result (step S103).

In step S104, the smart controller 102 transmits control instruction information including the operation modes, which correspond to the illumination 110 and the air conditioner 112, to the remote control sensor unit 109. The remote control sensor unit 109 receives the control instruction information including the operation modes from the smart controller 102. Furthermore, the smart controller 102 transmits control instruction information including the operation mode, which corresponds to the heat storage 114, to the heat storage 114. The heat storage 114 receives the control instruction information.

In step S105, the remote control sensor unit 109 emits infrared rays corresponding to an operation instruction for performing an operation corresponding to the operation modes in the control instruction information. The illumination 110 and the air conditioner 112, which serve as a load, receive infrared rays corresponding to the operation instruction.

In step S106, the illumination 110 and the air conditioner 112 operate in the operation modes corresponding to the operation instruction. Furthermore, the heat storage 114 operates in the operation mode corresponding to the control instruction information.

### (3) Operation and effect

In the electric power system 1 according to the embodiment of the present invention, the photovoltaic cell 106; and the illumination 110, the air conditioner 112, and the heat storage 114, which serve as a load, are provided in the smart house 10 which is a power consumer, and the smart controller 102 in the smart house 10 controls the illumination 110, the air conditioner 112, and the heat storage 114, which serve as a load. Specifically, the smart controller 102 detects the remaining power amount of the battery 108. Moreover, at the time of a self-sustained operation, the smart controller 102 compares the detected remaining power amount with a remaining amount threshold value in the predetermined correspondence relation between the operation modes and the remaining amount threshold values, thereby making a decision so that the operations modes of the illumination 110, the air conditioner 112, and the heat storage 114, which serve as a load are operation modes in which power consumption is reduced as the remaining power amount is smaller. Moreover, the smart controller 102 controls the illumination 110, the air conditioner 112, and the heat storage 114, which serve as a load, in a direct manner or via the remote control sensor unit 109 such that the illumination 110, the air conditioner 112, and the heat storage 114, which serve as a load, operate in the decided operation mode.

As described above, the smart controller 102 makes a decision so that the operation modes of the loads are the operation modes in which the power consumption is reduced as the remaining power amount is smaller, so that is possible to make the power supplied from the battery 108 to the loads as small as possible and to operate the loads for a long time.

Furthermore, the remote control sensor unit 109 is installed on the ceiling of a room provided with the illumination 110 and the air conditioner 112, which serve as a load, and emits infrared rays corresponding to an operation instruction for operating the illumination 110 and the air conditioner 112, which serve as a load, in the decided operation mode. Consequently, even when the smart controller 102 and the respective loads are not connected to each other through the in-house communication line 160, it is possible for the smart controller 102 to control the respective loads.

### (4) Modification according to the present embodiment

### (4.1) First modification

Next, the first modification according to the above-mentioned embodiment will be described.

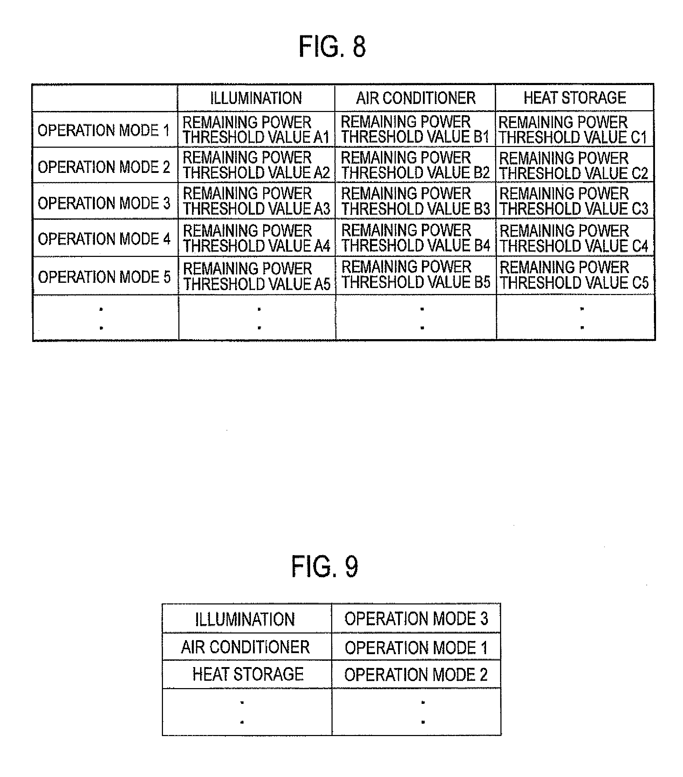

In the smart controller 102 according to the present modification, the storage unit 153 stores operation modes and remaining amount threshold values of the battery, which are associated with one another, for each of the illumination 110, the air conditioner 112, and the heat storage 114, which serve as a load, as illustrated in Fig. 8. Specifically, the storage unit 153 stores operation modes 1 to 5 which are associated with remaining amount threshold values A1 to A5 of the illumination 110, remaining amount threshold values B1 to B5 of the air conditioner 112, and remaining amount threshold values C1 to C5 of the heat storage 114, respectively. In other words, the storage unit 153 stores remaining amount threshold values and operation modes, which are associated with one another and different from one another, for each of the illumination 110, the air conditioner 112, and the heat storage 114. In addition, in the present modification, it is assumed that power consumption is reduced as the operation mode has a higher number.

Furthermore, as illustrated in Fig. 9, the storage unit 153 stores the immediately-preceding operation mode before the self-sustained operation time, for each of the illumination 110, the air conditioner 112, and the heat storage 114. In addition, it is assumed that the operation modes illustrated in Fig. 9 are stored by the load control unit 164.

Furthermore, at the time of a self-sustained operation, the load control unit 164 according to the present embodiment selects the operation mode for each of the illumination 110, the air conditioner 112, and the heat storage 114 based on the remaining amount of the battery 108 and the remaining amount threshold value of the battery 108.

Specifically, as illustrated in Fig. 8, the load control unit 164 refers to the remaining amount threshold values for each of the illumination 110, the air conditioner 112, and the heat storage 114, which are stored in the storage unit 153. The load control unit 164 decides the operation mode for each of the illumination 110, the air conditioner 112, and the heat storage 114 based on a result obtained by comparing the referred remaining amount threshold values with the remaining amount of the battery 108. Here, it is assumed that these are a first operation mode.

Meanwhile, as illustrated in Fig. 9, the load control unit 164 reads out the immediately-preceding operation mode before a self-sustained operation time, from the storage unit 153, for each of the illumination 110, the air conditioner 112, and the heat storage 114. Here, it is assumed that these are a second operation mode.

The load control unit 164 compares the first mode (for example, the operation mode 3) with the second mode (for example, the operation mode 4), for each of the illumination 110, the air conditioner 112, and the heat storage 114, and selects an operation mode (for example, the operation mode 4) with a high number. That is, the load control unit 164 selects an operation mode with small power consumption.

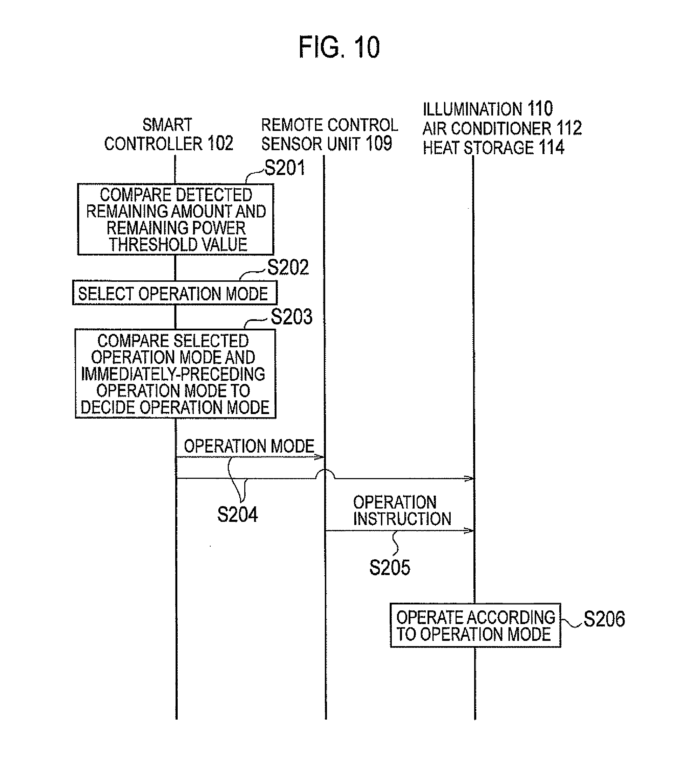

Next, the operation of the electric power system 1 according to the present modification will be described. Fig. 10 is a sequence diagram illustrating the operation of the electric power system 1 according to the present modification.

At the time of a self-sustained operation, in step S201, the smart controller 102 detects the remaining power amount of the battery 108, and compares the remaining power amount with a remaining amount threshold value in the predetermined correspondence relation between the operation modes and the remaining amount threshold values.

In step S202, the smart controller 102 selects the operation modes of the illumination 110, the air conditioner 112, and the heat storage 114, which serve as a load, based on a comparison result. At this time, the smart controller 102 separately selects the first operation mode of the illumination 110, the air conditioner 112, and the heat storage 114.

In step S203, the smart controller 102 reads out the immediately-preceding, second operation mode before the self-sustained operation time, from the storage unit 153, for each of the illumination 110, the air conditioner 112, and the heat storage 114. The load control unit 164 compares the first operation mode with the second operation mode, for each of the illumination 110, the air conditioner 112, and the heat storage 114, and selects an operation mode with a high number. That is, the load control unit 164 selects an operation mode with small power consumption, and decides the operation mode as an operation mode to be transmitted to the illumination 110, the air conditioner 112, and the heat storage 114.

Since the operations of step S204 to S206 are equal to the operations of step S104 to S106 according to the above-mentioned embodiment, description thereof will be omitted.

As described above, according to the present modification, the smart controller 102 decides the operation mode for each of loads of the illumination 110, the air conditioner 112, and the heat storage 114, so that it is possible to perform power control according to the use states of the respective loads. Furthermore, according to the present modification, since the smart controller 102 compares the first operation mode selected at the time of the self-sustained operation with the immediately-preceding, second operation mode before the self-sustained operation time and selects the operation mode with small power consumption, when the immediately-preceding operation mode before the self-sustained operation time has already been operated as the operation mode with small power consumption, it is possible to maintain this operation mode even at the time of the self-sustained operation. As described above, at the time of the self-sustained operation, the immediately-preceding operation mode before the self-sustained operation time may be used, or the operation mode selected based on the remaining threshold value may be used. However, as with the present modification, the operation mode with small power consumption is selected, so that it is possible to prevent a user from feeling inconvenienced if possible even at the time of the self-sustained operation.

In addition, in the present modification, the case, in which the operation modes of the illumination 110, the air conditioner 112, and the heat storage 114 are separately selected, has been described. However, the remaining amount threshold values illustrated in Fig. 8 may be used in common and the same operation mode may be selected.

### (4.2) Second modification

Next, the second modification according to the above-mentioned embodiment will be described.

In the remote control sensor unit 109 according to the present modification, the motion sensor 176 detects a human (a user) staying in a predetermined area. Here, the predetermined area indicates an area of a room provided with a load such as the illumination 110 and the remote control sensor unit 109. In addition, in the smart house 10, when there are a plurality of rooms provided with loads, the remote control sensor unit 109 having the motion sensor 176 may be provided in each room.

Furthermore, in the remote control sensor unit 109 according to the present modification, when the motion sensor 176 has detected a human, the motion sensor 176 transmits detection information to the smart controller 102 via the communication unit 174 and the in-house communication line 160, wherein the detection information includes information indicating the presence or absence of a human and the identification ID of the motion sensor 176.

As illustrated in Fig. 8, the storage unit 153 according to the present modification stores the operation modes and the remaining amount threshold values of the battery, which are associated with one another, for each of the illumination 110, the air conditioner 112, and the heat storage 114, which serve as a load.

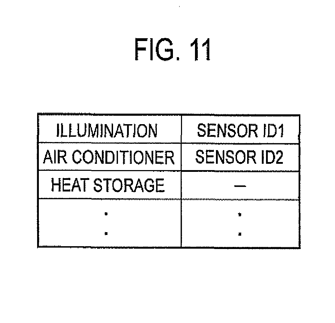

Furthermore, as illustrated in Fig. 11, the storage unit 153 stores identification IDs for identifying the motion sensor 176, which are associated with the illumination 110, the air conditioner 112, and the heat storage 114, which serve as a load, respectively. In addition, an identification ID associated with the heat storage 114 does not exist. This represents that the heat storage 114 operates regardless of the detection of the motion sensor 176.

At the time of the self-sustained operation, when a human has not been detected by the motion sensor 176, the load control unit 164 according to the present modification restricts power consumption of the illumination 110 and the air conditioner 112. Specifically, at the time of the self-sustained operation, the load control unit 164 requests the motion sensor 176 to notify detection information. In spite of the request, when the detection information is not received from the motion sensor 176, the load control unit 164 selects a load corresponding to the identification ID of the remote control sensor unit 109 having not complied with the request, based on the identification ID illustrated in Fig. 11. Next, the load control unit 164 selects an operation mode with the largest number as an operation mode of the selected load. That is, the load control unit 164 selects an operation mode with the smallest power consumption. At this time, the load control unit 164 may also select the stop of an operation, a standby state and the like as an operation mode.

Meanwhile, when a human has been detected by the motion sensor 176, in other words, when the detection information has been received from the motion sensor 176, the load control unit 164 selects an operation mode based on the remaining amount of the battery 108 and the remaining amount threshold value of the battery 108. Specifically, as illustrated in Fig. 8, the load control unit 164 refers to the remaining amount threshold values for each of the illumination 110, the air conditioner 112, and the heat storage 114, which are stored in the storage unit 153. The load control unit 164 decides the operation mode for each of the illumination 110, the air conditioner 112, and the heat storage 114 based on a result obtained by comparing the referred remaining amount threshold value for each of the illumination 110, the air conditioner 112, and the heat storage 114 with the detected remaining amount of the battery 108.

In addition, when a human has been detected by the motion sensor 176, as illustrated in Fig. 9, the load control unit 164 may read out the immediately-preceding operation mode before the self-sustained operation time of the illumination 110, the air conditioner 112, and the heat storage 114 from the storage unit 153, and select the read-out operation mode.

Next, the operation of the electric power system 1 according to the present modification will be described. Fig. 11 is a sequence diagram illustrating the operation of the electric power system 1 according to the present modification.

At the time of the self-sustained operation, in step S301, the smart controller 102 requests the motion sensor 176 to notify detection information. In addition, when a plurality of motion sensors 176 are provided, the smart controller 102 requests the plurality of motion sensors 176 to notify the detection information.

In step S302, when the motion sensor 176 has detected the presence of a human in a room, the motion sensor 176 transmits the detection information to the smart controller 102.

Hereinafter, the following description will be given on the assumption that the presence of a human has been detected in a room provided with the illumination 110 and the presence of a human has not been detected in a room provided with the air conditioner 112. In other words, it is assumed that the smart controller 102 has received the detection information from the motion sensor 176 of the room provided with the illumination 110, and has not received the detection information from the motion sensor 176 of the room provided with the air conditioner 112.

In step S303, the smart controller 102 selects the illumination 110 as a load, an operation mode of which should be decided. Furthermore, the smart controller 102, the load control unit 164 selects an operation mode with the smallest power consumption for the air conditioner 112.

In step S304, the smart controller 102 detects the remaining power amount of the battery 108, and compares the remaining power amount with a remaining amount threshold value in the predetermined correspondence relation between the operation modes and the remaining amount threshold values. At this time, the smart controller 102 compares the remaining power amount with the remaining amount threshold value with respect to the illumination 110 and the heat storage 114.

In step S305, the smart controller 102 decides the operation modes of the illumination 110 and the heat storage 114, which serve as a load, based on a comparison result. At this time, the smart controller 102 decides the operation modes of the illumination 110 and the heat storage 114, respectively.

In step S306, the smart controller 102 notifies the illumination 110 and the heat storage 114 of the respective decided operation modes. Furthermore, the smart controller 102 notifies the air conditioner 112 of the operation mode with the smallest power consumption.

Hereinafter, since the operations of step S307 and S308 are equal to the operations of step S105 and S106 according to the above-mentioned embodiment, description thereof will be omitted.

As described above, according to the present modification, the smart controller 102 decides the operation modes of the loads according to whether the motion sensor 176 has detected the presence of a human, so that it is possible to make as small as possible the power supplied from the battery 108 with respect to a load not used by a human, and to operate the loads for a long time.

In addition, in step S305, the smart controller 102 may decide the operation mode of the illumination 110 by reading out the immediately-preceding operation mode before the self-sustained operation time from the storage unit 153. According to the smart controller 102, it is possible to allow a load in a room where a human stays to operate with the immediately-preceding operation mode before the self-sustained operation time, so that it is possible to prevent a user from feeling inconvenienced if possible even at the time of the self-sustained operation.

### (5) Other embodiments

As described above, the present invention has been described with the embodiments. However, it should not be understood that those descriptions and drawings constituting a part of the present disclosure limit the present invention. From this disclosure, a variety of alternate embodiments, examples, and applicable techniques will become apparent to one skilled in the art.

In the above-mentioned embodiment, the photovoltaic cell 106 is used as a DC power supply. However, even in the case of using other DC power supplies, the invention can be applied in the same manner.

Furthermore, the load control unit 164 may also set priorities to the illumination 110, the air conditioner 112, and the heat storage 114, which serve as a load, which are objects to be controlled. In this case, when an operation mode with lower power consumption is decided as compared with a present operation mode, the load control unit 164, transmits in order of control instruction information corresponding to loads with increasing priorities to the remote control sensor unit 109. This allows for a situation where the load with a lower priority is transitioned to an operation mode with lower power consumption, and the load with a higher priority can be operated without reducing the power consumption as much as possible.

Furthermore, the function of the smart controller 102 according to the above-mentioned embodiment can also be embedded in another device such as the smart meter 103. Furthermore, the function of the smart controller 102 may also be provided in the EMS 70, and can be applied to various systems using smart grid technology such as HEMS (Home Energy Management System) or BEMS (Building and Energy Management System).

Thus, it must be understood that the present invention includes various embodiments that are not described herein. Therefore, the present invention is limited only by the specific features of the invention in the scope of the claims reasonably evident from the disclosure above.

The entire contents of Japanese Patent Application No. 2009-272986 (filed on November 30, 2009) are incorporated in the present specification by reference.

### INDUSTRIAL APPLICABILITY

The control device, the control system, and the control method of the present invention can increase the operation time of loads, and are available as a control device and the like.

## Claims

1. A control device provided in a power consumer including a DC power supply, a load, and a battery capable of storing power from the DC power supply, and controlling the load, the control device comprising:
a detection unit configured to detect a remaining amount of the battery; and
a load control unit configured to control a degree of power consumption of the load according to the remaining amount of the battery detected by the detection unit, at a time of a self-sustained operation in which no power from an electric power system is supplied to the load.

2. The control device according to claim 1, wherein the load control unit strengthens restriction of the power consumption as the remaining amount of the battery is smaller, and loosens the restriction of the power consumption as the remaining amount of the battery is larger.

3. The control device according to claim 1, wherein
operation modes related to the load are associated with threshold values of the remaining amount of the battery, and
the load control unit selects the operation mode based on the remaining amount of the battery detected by the detection unit and the threshold values of the remaining amount of the battery.

4. The control device according to claim 3, wherein the operation modes are associated with the threshold values of the remaining amount of the battery for respective load.

5. The control device according to claim 1, wherein the load control unit transmits an instruction related to control of the degree of the power consumption of the load to a device for operating a plurality of load.

6. The control device according to claim 4, further comprising, in the consumer, a sensor configured to detect a user staying in a predetermined area where the load is provided, wherein
the load control unit restricts the power consumption of the load, when the user is not detected by the sensor.

7. The control device according to claim 6, wherein, the load control unit selects an operation mode related to the load immediately before the self-sustained operation time, when the user is detected by the sensor.

8. A control system including a control device provided in a power consumer including a DC power supply, a load, and a battery capable of storing power from the DC power supply, and controlling the load, and a device capable of operating the plurality of load, wherein
the control device comprises:
a detection unit configured to detect a remaining amount of the battery; and
a load control unit configured to control a degree of power consumption of the load according to the remaining amount of the battery detected by the detection unit, at a time of a self-sustained operation in which power from an electric power system is not supplied to the load, and to transmit an instruction related to control of the degree of the power consumption of the load to the device, and
the device comprises: a transmission unit configured to transmit an operation instruction to the load, the operation instruction corresponding to the instruction related to the control of the degree of the power consumption of the load.

9. A control method in a control device provided in a power consumer including a DC power supply, a load, and a battery capable of storing power from the DC power supply, and controlling the load, the control method comprising:
a step of detecting, by the control device, a remaining amount of the battery; and
a step of controlling, by the control device, a degree of power consumption of the load according to the detected remaining amount of the battery, at a time of a self-sustained operation in which no power from an electric power system is supplied to the load.
